# EUROPÄISCHE PATENTSCHRIFT

(11) **EP 0 684 196 B1**
(45) Veröffentlichungstag und Bekanntmachung des Hinweises auf die Patenterteilung: **21.10.1998**
(21) Anmeldenummer: 95810323.6
(22) Anmeldetag: 15.05.1995
(51) Int. Cl.: B65G 47/51, B65G 47/57

(54) **Transport-Gruppier- und Speichervorrichtung**
Transport-grouping- and storage device
Dispositif de groupage, de transport et de stockage

(30) Priorität: 25.05.1994 CH 1614/94
(43) Veröffentlichungstag der Anmeldung: 29.11.1995
(73) Patentinhaber: SIG Pack Systems AG, 8222 Beringen (CH)
(72) Erfinder: Gasser, Markus, CH-8214 Gächlingen (CH)
(74) Vertreter: Münch, Otto

(56) Entgegenhaltungen:
- EP-A- 0 302 538
- EP-A- 0 534 902
- DE-A- 3 040 534
- DE-A- 4 119 514
- US-A- 5 261 522

## Beschreibung

In der EP-A-534 902 ist eine Speichervorrichtung beschrieben, bei welcher der Speicher an Ketten aufgehängte Gondeln mit mehreren Tablaren enthält. In einer Eingangsstation, an welcher die Gondeln vertikal vorbeibewegt werden, werden die Tablare mit Reihen von flachliegenden Produkten beschickt. In einer Ausgangsstation werden die Reihen auf ein Förderband oder dergleichen ausgestossen.

Der vorliegenden Erfindung liegt die Aufgabe zugrunde, eine Transport-Gruppier- und Speichervorrichtung anzugeben, mit welcher die flachliegenden Produkte schonend und rationell zu Gruppen gestapelt werden können. Diese Aufgabe wird durch die Merkmalskombination der Ansprüche gelöst.

Aus der US-A-5 261 522 ist ein weiterer Speicher bekannt, der allerdings keine Trägergondeln hat. Von zwei parallel umlaufenden Ketten stehen Tablare senkrecht ab. In einer Eingangsstation werden die Tablare mit einer Reihe von Produkten beschickt. In der Ausgangsstation werden jeweils mehrere Tablare gleichzeitig entleert, um Gruppen von übereinandergeschichteten Produkten zu bilden. Dazu greifen Finger in Schlitze in den Tablaren ein und stossen die Produkte reihenweise aus mehreren übereinander angeordneten Tablaren aus.

Nachfolgend wird ein Ausführungsbeispiel der Erfindung anhand der Zeichnungen erläutert. Darin zeigt:
- Figur 1: Eine schematische Seitenansicht einer erfindungsgemässen Vorrichtung,
- Figur 2: eine Stirnansicht eines Teils einer Gondel,
- Figur 3: eine schematische Draufsicht auf die Ausgangsstation,
- Figuren 4 und 5: Seitenansichten eines Sammlers,
- Figuren 6 und 7: einen Horizontalschnitt und eine Stirnansicht des Sammlers,
- Figuren 8 une 9: Stirnansichten eines Staplers,
- Figuren 10-20: schematische Darstellungen der Funktionsweise der Ausgangsstation,
- Figur 21: eine Variante der Eingangsstation, und
- Figuren 22 und 23: eine Variante der Ausgangsstation.

Die Vorrichtung umfasst einen Speicher 1 mit einer Eingangsstation 2 und einer Ausgangsstation 3. Der Speicher 1 hat zwei parallel zueinander verlaufende, synchron angetriebene, endlose Ketten 4, welche über Umlenkräder 5, 6, 7, 8, 9 geführt sind. Durch je zwei der Umlenkräder 6, 7 und die Umlenkräder 8, 9 sind zwei Schlaufen 10, 11 gebildet. Die Räder 8 und 9 sind auf einem gemeinsamen, auf nicht dargestellten Schienen vertikal verschiebbaren Schlitten 12 drehbar gelagert. Zwei koaxiale Umlenkräder 5 der beiden Ketten 4 auf der Eingangsseite der Speicherschlaufe 10 sind durch einen gemeinsamen Motor 13 angetrieben. Zwei koaxiale Räder 6 auf der Eingangsseite der Schlaufe 11 sind durch einen unabhängig vom Motor 13 antreibbaren Motor 14 angetrieben. Dreht der Motor 14 durchschnittlich langsamer als der Motor 13, so wird die volle Speicherschlaufe 10 länger und die leere Schlaufe 11 kürzer, der Speicher 1 also gefüllt. Dreht der Motor 14 hingegen durchschnittlich rascher, wird der Speicher 1 entleert.

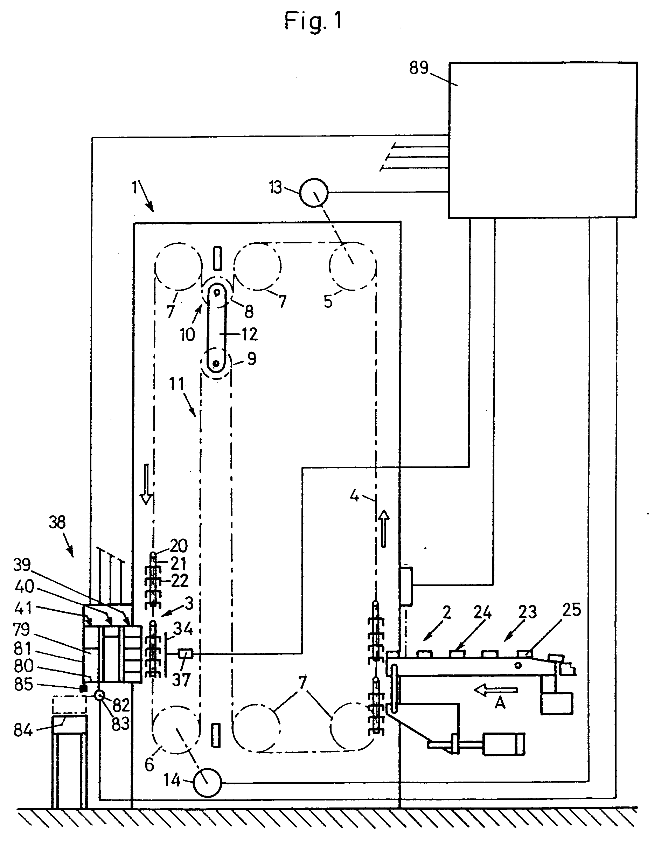

An den Ketten 4 sind in regelmässigen Abständen um Achsen 20 schwenkbare Gondeln 21 aufgehängt, die horizontale, vertikal übereinander liegende Tablare 22 tragen. Innerhalb der Gondeln haben die Tablare 22 einen konstanten Abstand voneinander. In Figur 1 sind lediglich vier Tablare 22 pro Gondel 21 dargestellt. Die Gondeln können jedoch wesentlich mehr Tablare aufweisen.

Bei der Eingangsstation 2 werden mit einem Zufuhrförderer 23 in einer Förderrichtung A ausgerichtete Reihen 24 von Produkten 25 auf die Tablare 22 geschoben. Der Zufuhrförderer 23 kann gleich ausgebildet sein, wie in der EP-A-534 902 beschrieben und dargestellt. Auf diese Schrift wird deshalb verwiesen und dieser Förderer nicht nochmals erläutert.

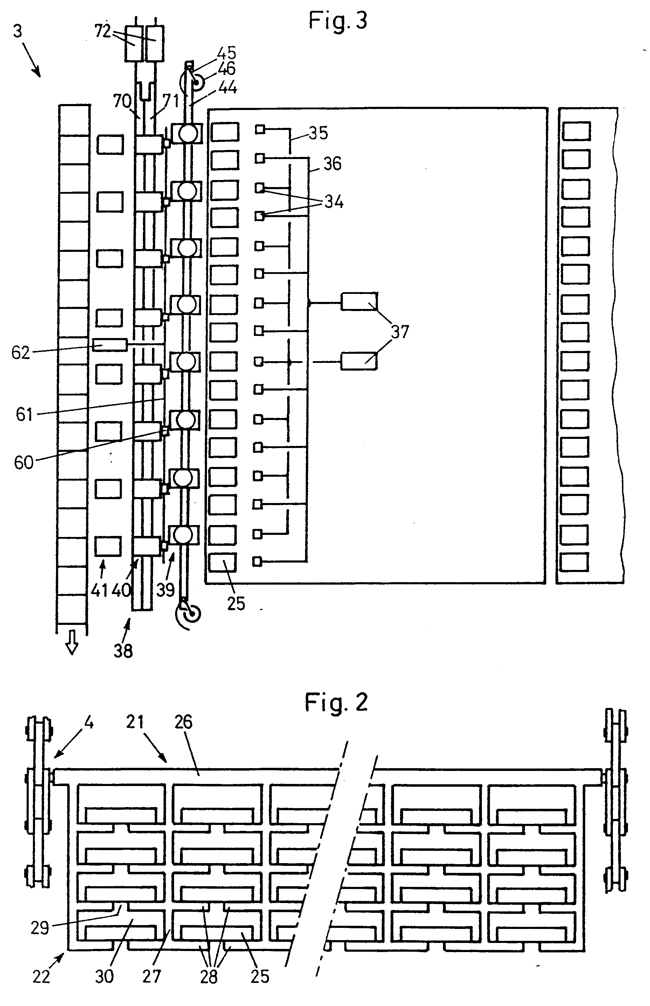

Wie aus Figur 2 hervorgeht, bestehen die Gondeln 21 aus einem durchgehenden, an beiden Enden an den Ketten 4 schwenkbar gelagerten Träger 26, an dem in regelmässigen Abständen vertikale Seitenführungsbleche 27 befestigt sind. Die horizontalen Tablare 22 sind als voneinander beabstandete Tablarhälften 28 an diesen Blechen 27 befestigt. Die durch die Tablarhälften 28 gebildeten Schlitze 29 liegen senkrecht übereinander. Durch die Tablarhälften 28 und die Bleche 27 sind Taschen 30 gebildet, in welche in der Eingangsstation 2 die Produkte 25 reihenweise eingeschoben werden.

Die Ausgangsstation 3 hat zwei Reihen von vertikalen, stabförmigen Stösseln 34 (Figur 3). Die eine Reihe der Stössel 34 ist an einem ersten Träger 35 befestigt, die zweite Reihe an einem weiteren Träger 36. Der Abstand benachbarter Stössel 34 von jedem Träger ist doppelt so gross wie der Abstand der Produkte 25 auf den Tablaren 22 oder der Abstand der Seitenführungsbleche 27 voneinander. Die Träger 35, 36 werden durch je ein Huborgan 37 betätigt. Bei Betätigung des betreffenden Huborgans 37 schieben die betreffenden Stössel 34 alle übereinander liegenden Produkte 25 von den Tablaren 22 in einen Gruppierer 38.

Der Gruppierer 38 besteht aus je einer Reihe von Sammlern 39, einer Reihe von Staplern 40 und einer Reihe von Ablegern 41. Die Anzahl der Sammler 39, Stapler 40 und Ableger 41 ist halb so gross wie die Anzahl der Fächer 30 der Gondeln 21 eines Tablars 22. Der seitliche Mittenabstand zwischen Sammler, Stapler und Ableger ist doppelt so gross wie der Abstand der Seitenführungsbleche 27 voneinander. Dadurch wird bei voller Ausnützung der Speicherbreite für die Produktspeicherung hinreichend Raum geschaffen für den nachfolgend beschriebenen Aufbau der Sammler 39, Stapler 40 und Ableger 41 sowie deren Zuführ- und Betätigungsorgane.

Die Sammler 39 sind auf einem gemeinsamen Träger 44 montiert, der beidseitig an horizontalen Schwenkhebeln 45 aufgehängt ist.

Einer der Schwenkhebel 45 ist durch einen Motor 46 in drei Stellungen schwenkbar, und zwar in Schritten von einem Viertel des Mittenabstandes der Sammler 39. In beiden Endstellungen fluchten die Sammler 39 mit je einer übereinander liegenden Reihe von Taschen 30 der Gondeln 21. In der Mittelstellung fluchten die Sammler 39 mit den nachgeschalteten Staplern 40. Dadurch wird das Ausschieben der Produkte 25 aus den Sammlern 39 in die Stapler 40 mit separaten Stösseln 60 ermöglicht. Die vertikalen, stabförmigen Stössel 60 sind an einem gemeinsamen Balken 61 befestigt, der mittels eines Zylinders 62 verschiebbar ist (Figur 3).

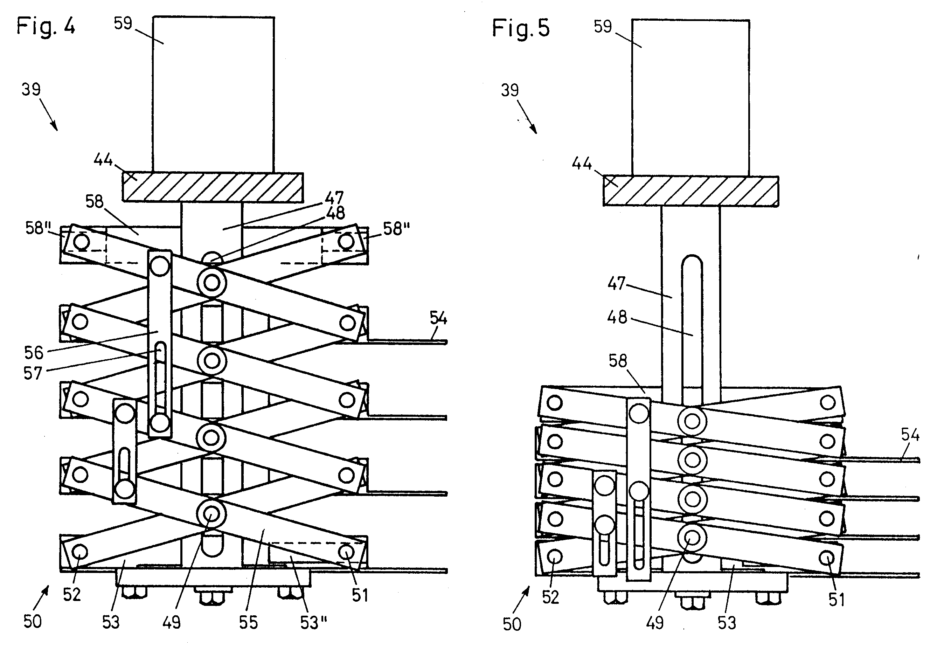

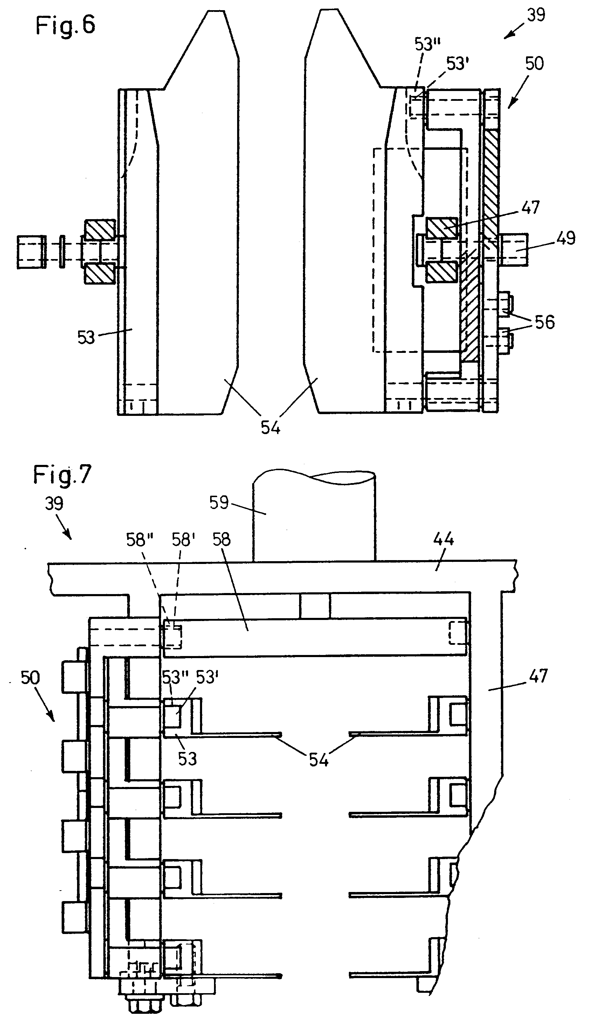

In Figuren 4-7 ist einer der Sammler 39 detaillierter dargestellt. Am Träger 44 sind für jeden Sammler 39 zwei vertikale Träger 47 mit Längsschlitzen 48 befestigt. In diesen Schlitzen 48 sind die Mittelgelenke 49 je einer Nürnberger Schere 50 geführt. Die Aussengelenke 51, 52 der Schere 50 tragen Tablarträger 53 mit Seitenführungen, von denen je eine Tablarhälfe 54 nach innen absteht. Die untersten beiden Tablarträger 53 sind an den Trägern 47 horizontal geringfügig verschiebbar befestigt. Die Zapfen der Gelenke 52 sind mit den Trägern 53 fest verbunden. Die Zapfen 51 sind dagegen in den Trägern 53 mit Rollen 53' in Schlitzen 53'' etwas horizontal verschiebbar. Um sicherzustellen, dass auch nach längerem Betrieb die Tablare 54 gleichmässige Abstände voneinander haben, sind seitlich an mehreren Scherengliedern 55 Distanzhalter angebracht. Diese bestehen aus Laschen 56, die am oberen Ende gelenkig mit dem einen Scherenglied 55 verbunden sind und am unteren Ende einen Längsschlitz 57 haben, in den ein in einem andern Scherenglied 55 befestigter Stift eingreift. Die obersten beiden Gelenke 51, 52 jeder Seite sind mit Rollen 58' und Schlitzen 58'' an einer gemeinsamen Platte 58 gelagert, die mittels eines Pneumatikzylinders 59 aus der oberen Grenzstellung (Figur 4), in welcher der Abstand der Tablare 54 gleich dem Abstand der Gondeltablare 22 ist, in eine untere Grenzstellung (Figur 5) absenkbar, in welcher der Tablarabstand wesentlich reduziert ist.

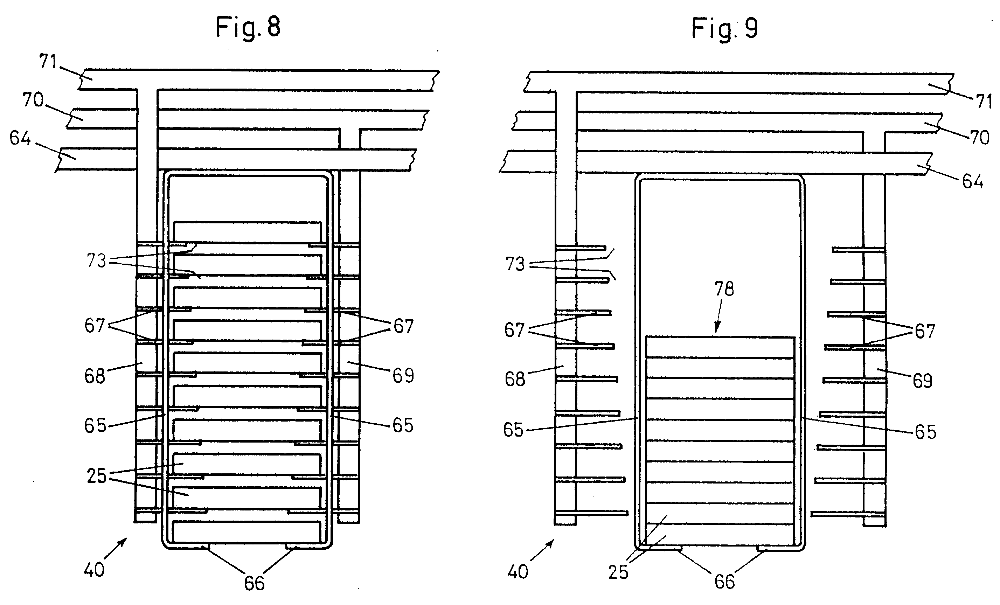

In Figuren 8 und 9 ist einer der Stapler 40 detaillierter dargestellt. An einem für alle Stapler 40 gemeinsamen Träger 64 sind bei jedem Stapler 40 zwei Seitenführungsbleche 65 befestigt. Diese sind unten rechtwinklig gegeneinander abgekröpft, sodass zwei unterste, unbewegliche Tablarhälften 66 gebildet werden, auf welche das unterste Produkt 25 aus dem Sammler 39 eingeschoben wird. Durch Schlitze in den Blechen 65 sind in der Grundstellung (Figur 8) weitere Tablarhälften 67 eingesteckt, welche an vertikalen Trägern 68 , 69 befestigt sind. Die rechten Träger 69 sind an einem Balken 70 und die linken an einem zweiten Balken 71 befestigt. Die Balken 70, 71 sind mittels zweier Zylinder 72 gegensinnig aus der in Figur 8 gezeigten Grundstellung, in welcher die Tablarhälften 67 die Produkte 25 unterstützen, in die ausgeschobene Stellung nach Figur 9 verschiebbar, in welcher die Tablarhälften 67 seitlich ausserhalb der Führungsbleche 65 gezogen sind. Weil der Zwischenraum 73 zwischen den Tablarhälften 67 von unten nach oben progressiv grösser ist, fallen bei dieser Verschiebung der Balken 70, 71 die Produkte 25 von oben nach unten progressiv über bloss eine geringe Strecke aufeinander, sodass die Produkte 25 sehr schonend und ohne gegenseitige Reibung an ihren Grossflächen gestapelt werden.

Der so gebildete Stapel 78 wird durch die gleichen Stössel 60 aus den Staplern 40 in die dahinter angeordneten Ableger 41 geschoben. Die Stössel 60 werden durch den Schlitz 73 zwischen den Tablarhälften 66 durchgeschoben. Die Ableger 41 haben Seitenführungswände 79, eine Auflage 80 und eine Rückwand 81. Die Ableger 41 sind auf einer gemeinsamen Welle 82 montiert und mittels eines Motors 83 aus der in Figur 1 ausgezogen dargestellten Grundstellung um 90° in die strichpunktiert dargestellte, abgesenkte Stellung schwenkbar, in welcher die Rückwände 81 unmittelbar über einem Förderband 84 liegen. Die Rückwände 81 sind an einem Balken 85 befestigt, der durch einen nicht dargestellten Zylinder relativ zur Welle 82 in deren Längsrichtung verschiebbar ist, sodass die Stapel 78 auf das Förderband 84 abgelegt werden, worauf die Ableger 41 in die Grundstellung zurückgeschwenkt werden. Anschliessend werden die Stapel 78 durch das Förderband 84 abtransportiert.

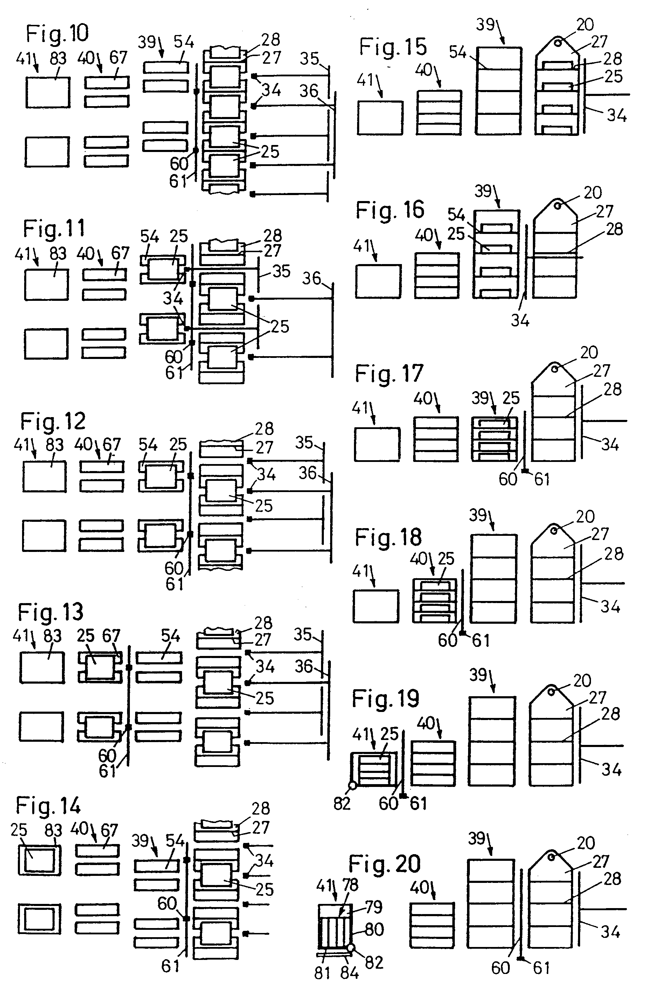

Die Betriebsweise der beschriebenen Vorrichtung wird anschliessend anhand der schematischen Darstellungen in den Figuren 10-20 erläutert, wobei die Figuren 10-14 Draufsichten und die Figuren 15-20 Seitenansichten sind.

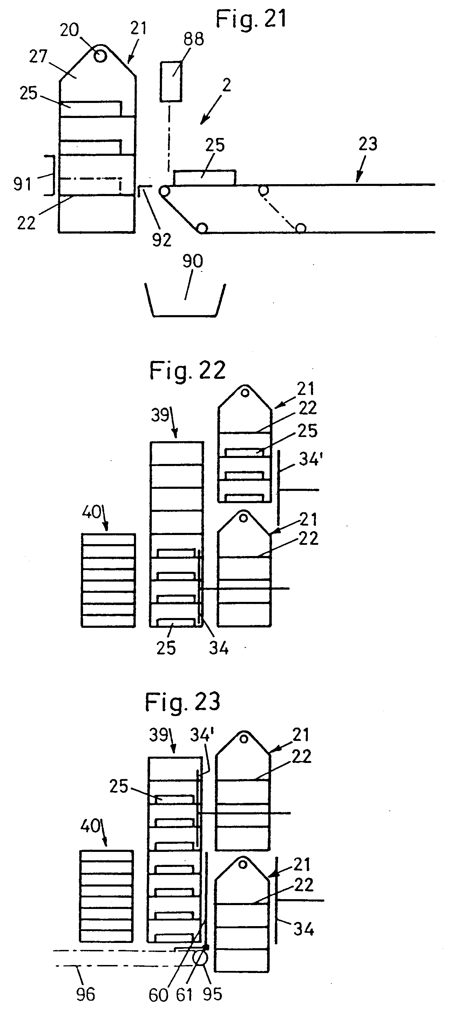

Der Motor 14 wird angehalten, wenn die Tablare 28 einer gefüllten Gondel 21 mit den Tablaren 54 der Sammler 39 fluchten, was zum Beispiel mittels eines nicht dargestellten Fühlers gesteuert werden kann (Figuren 10 und 15). Nun wird die Reihe von Stösseln 34 mittels des Trägers 35 vorgeschoben, welche mit den Sammlern 39 fluchtet und damit Gruppen von Produkten 25 auf die Tablare 54 der Sammler 39 geschoben (Figuren 11 und 16). Die Stössel 34 kehren in ihre Grundstellung zurück. Die Sammler 39 werden durch gemeinsame Betätigung aller Zylinder 59 aus der Grundstellung (Figur 4) abgesenkt (Figur 5). Gleichzeitig werden sie mittels des Motors 46 in die Mittelstellung verschoben, in welcher sie mittig vor die Stössel 60 gelangen und mit den Staplern 40 fluchten (Figuren 12 und 17). Mittels der Stössel 60 werden nun die Gruppen von den Sammlern 39 in Stapler 40 geschoben (Figuren 13 und 18). Die Tablarhälften 67 der Stapler 40 werden mittels der Zylinder 72 seitlich ausserhalb der Seitenführungswände 65 verschoben, sodass aus den Gruppen von Produkten 25 je ein Stapel 78 gebildet wird. Diese Stapel werden mit den Stösseln 60 in die Ableger 41 geschoben (Figur 19). Die Stössel 60 kehren anschliessend in ihre Ausgangsposition zurück und die Sammler 39 werden in ihre andere Endstellung verschoben (Figur 14). Gleichzeitig werden die Stapel 78 durch Verschwenken der Ableger 41 mittels der Welle 82 und Verschieben der Rückwände 81 mittels des nicht dargestellten Zylinders auf das Förderband 84 abgelegt (Figur 20) und mit diesem abtransportiert. Im nächsten Takt werden die restlichen Produkte 25 der Gondel 21 in gleicher Weise durch Stössel 34 an Träger 36 in Sammler 39 (Figur 14) und von dort durch Stössel 60 in Stapler 40 und Ableger 41 auf das Förderband 84 befördert und anschliessend die Kette 4 auf der Ausgangsseite um eine Gondelteilung weiter bewegt, worauf sich der Vorgang wiederholt.

Die beschriebene Vorrichtung ist raumsparend, weil die Speicherbreite voll ausgenützt werden kann, indem die Produkte 25 auf den Tablaren 22 dicht nebeneinander gelagert werden können. Die Vorrichtung ermöglicht die direkte Stapelung und Hochstellung der Produkte ausgehend von flachliegenden Reihen bei sehr schonender Handhabung der Produkte. Abrieb, Druck und Schläge auf die Produkte werden vermieden. Die Vorrichtung ermöglicht eine hohe Leistung.

Abweichend von der beschriebenen Ausführungsform könnte auch bloss eine einzige Reihe von Stösseln 34 mit nur einem Träger 35 vorgesehen sein, der dafür in seiner Längsrichtung um den Abstand der Führungsbleche 27 voneinander hin und her verschiebbar wäre.

Figur 21 zeigt eine Variante der Eingangsstation 2, bei welcher der Zufuhrförderer 23 stationär, also nicht höhenbeweglich ist und dementsprechend der Motor 13 schrittweise geschaltet wird. Unmittelbar vor der Uebergabestelle ist eine Reihe von Reflexlichtschranken 88 angeordnet. Mittels der Signale der Lichtschranken 88 wird in einer Steuereinrichtung 89 kontrolliert, ob alle Produkte 25 der Reihe korrekt ausgerichtet sind. Wenn dies nicht der Fall ist, wird der Zufuhrförderer 23 aus der ausgezogen dargestellten in die strichpunktierte Lage zurückgezogen, sodass die Produkte 25 dieser Reihe in einen Sammelbehälter 90 fallen. Dadurch wird vermieden, dass bei schlecht ausgerichteten Reihen im Speicher 1 oder der Ausgangsstation 3 Störungen auftreten können.

Hinter dem zu beschickenden Tablar 22 der Gondel 21 ist ein stationärer Anschlag 91 angeordnet, damit die Produkte 25 mit relativ hoher Geschwindigkeit eingefördert werden können. Zwischen dem Förderer 23 und der Gondel 21 ist ein stationäres Zwischenblech 92 befestigt, das etwas über dem Niveau des zu beschickenden Tablars 22 ist und allenfalls vom Anschlag 91 zurückprallende Produkte 25 aufhält.

Die Höhe zwischen den Tablaren 22 kann auch mehr als die doppelte Produktehöhe betragen, wobei die Gondel 21 bei der Uebergabe entsprechend etwas mehr abgesenkt wird. Damit können zwei oder mehr Reihen von Produkten auf dasselbe Tablar 22 abgelegt werden und einen Teilstapel bilden.

Wie in den Figuren 22 und 23 veranschaulicht ist, kann auch ein höherer Stapel dadurch gebildet werden, dass die Sammler 39 mittels zweier übereinander angeordneter Stössel 34, 34' nacheinander aus zwei nacheinander zugeführten Gondeln 21 beschickt werden. In Figur 23 ist gezeigt, dass die Stössel 60 mit dem Balken 61 auch zum Beispiel mittels zweier um Kettenräder 95 geführten Ketten 96, an denen der Balken 61 befestigt ist, mittels eines nicht dargestellten Motors betätigt werden können.

## Patentansprüche

1. Transport-Gruppier- und Speichervorrichtung, um flache Produkte (25), insbesondere Nahrungsmittel, in Verpackungsmaschinen zu fördern, wobei ein Speicher (1) eine Eingangsstation (2), in welcher das Produkt (25) auf Auflagen (22) von Trägergondeln (21) gefördert werden, und eine Ausgangsstation (3) aufweist, in welcher die Produkte (25) in gleicher Orientierung wie in der Eingangsstation (2) ausgefördert werden, wobei die Trägergondeln (21) an beiden Stationen (2, 3) vertikal beweglich vorbeigeführt sind, dadurch gekennzeichnet, dass in der Ausgangsstation ein Gruppierer (38) angeordnet ist, um Gruppen von mehreren übereinander liegenden Produkten (25) zu bilden, wobei der Gruppierer eine Reihe von Sammlern (39) mit Tablaren (54) umfasst, deren Abstand voneinander von einer ersten Grundstellung, in welcher dieser Abstand dem Abstand der Auflagen (22) voneinander entspricht, mittels eines ersten Antriebsmittels (59) und eines Getriebemittels (50) auf einen zweiten, geringeren Abstand veränderbar ist.

2. Vorrichtung nach Anspruch 1, wobei der seitliche Abstand der Sammler (39) voneinander annähernd doppelt so gross ist wie der seitliche Abstand der Produkte (25) auf den Auflagen (22).

3. Vorrichtung nach Anspruch 2, wobei die Sammler (39) gemeinsam in Längsrichtung der Reihe der Sammler mittels eines zweiten Antriebsmittels (46) in drei Stellungen verschiebbar sind, und zwar in Schritten von je einem Viertel des Mittenabstandes benachbarter Sammler (39).

4. Vorrichtung nach einem der Ansprüche 1 bis 3, wobei das Getriebemittel aus Nürnberger Schere (50) ausgebildet ist.

5. Vorrichtung nach Anspruch 4, wobei die Nürnberger Schere (50) seitlich angeordnete, geschlitzte Laschen (56) als Abstandhalter aufweist.

6. Vorrichtung nach Anspruch 4 oder 5, wobei die Tablare aus zwei voneinander beabstandeten Tablarhälften (54) bestehen, zwischen denen ein Spalt zum Durchschieben eines Stössels (60) gebildet ist.

7. Vorrichtung nach Anspruch 6, wobei beidseitig je eine Nürnberger Schere (50) angeordnet ist, welche die entsprechenden Tablarhälften (54) tragen, und wobei das Antriebsmittel (59) auf beide Scheren (50) wirkt.

8. Vorrichtung nach einem der Ansprüche 1 bis 7, wobei jedem Sammler (39) ein Stapler (40) nachgeschaltet ist, der übereinander angeordnete Tragelemente (66, 67) zur Aufnahme der Produkte (25) enthält, deren Abstand voneinander annähernd dem zweiten Abstand der Tablare (54) der Sammler (39) entspricht, und von denen ausser dem untersten Tragelement (66) alle durch ein drittes Antriebsmittel (72) so ausser Wirkung gebracht werden können, dass die Produkte (25) aufeinanderfallen.

9. Vorrichtung nach Anspruch 8, wobei die Stapler (40) beidseitig Seitenführungen (65) haben und die Tragelemente (67) durch das dritte Antriebsmittel (72) aus dem Bereich der Seitenführungen (65) bewegbar sind.

10. Vorrichtung nach einem der Ansprüche 1 bis 9, wobei die Auflagen (22) der Gondeln (21) übereinander angeordnete Schlitze (29) aufweisen, durch welche in der Ausgangsstation (3) ein Stössel (34) mittels eines vierten Antriebsmittels (37) vorschiebbar ist.

11. Vorrichtung nach einem der Ansprüche 1 bis 10, wobei der Abstand der Auflagen (22) voneinander grösser ist als die doppelte Produktedicke und in der Eingangsstation (2) ein Zufuhrorgan (23) beim Beschicken der Auflagen (22) um mehr als den halben Abstand der Auflagen (22) voneinander oberhalb der zu beschickenden Auflage (22) angeordnet ist, so dass auf einer Auflage (22) mehrere Produkte übereinander ablegbar sind, um einen Teilstapel zu bilden.

12. Vorrichtung nach Anspruch 9, wobei die Tragelemente (67) und/oder das dritte Antriebsmittel (72) derart ausgebildet sind, dass sie nacheinander von oben nach unten aus dem Bereich der Seitenführungen bewegt werden.

13. Vorrichtung nach Anspruch 12, wobei jedes Tragelement aus zwei seitlichen Tragelementhälften (67) besteht, wobei die Tragelementhälften (67) jeder Seite an je einem gemeinsamen, durch das Antriebsmittel (72) betätigten Arm (68, 69) befestigt sind, und wobei der Zwischenraum (73) zwischen den Tragelementhälften (67) nach oben progressiv grösser ist.

## Claims

1. Transport grouping and storage apparatus for conveying flat products (25), in particular foodstuffs, into packaging machines, a store (1) having an entry station (2), in which the product (25) is conveyed on rests (22) of carrier gondolas (21), and an exit station (3), in which the products (25) are conveyed out in the same orientation as in the entry station (2), the carrier gondolas (21) being guided vertically movably past the two stations (2, 3), characterized in that a grouper (38) is arranged in the exit station, in order to form groups of a plurality of products (25) lying one above the other, the grouper comprising a series of collectors (39) with trays (54), the mutual spacing of which can be changed from a first basic position, in which this spacing corresponds to the mutual spacing of the rests (22), to a second smaller spacing by a first drive means (59) and a gear means (50).

2. Apparatus according to Claim 1, wherein the mutual lateral spacing of the collectors (39) is approximately twice as large as the lateral spacing of the products (25) on the rests (22).

3. Apparatus according to Claim 2, the collectors (39) being jointly displaceable in the longitudinal direction of the series of collectors into three positions by means of a second drive means (46), specifically in steps each of one quarter of the centre-to-centre spacing of adjacent collectors (39).

4. Apparatus according to one of Claims 1 to 3, wherein the gear means is designed as lazy tongs (50).

5. Apparatus according to Claim 4, wherein the lazy tongs (50) have laterally arranged slotted links (56) as spacers.

6. Apparatus according to Claim 4 or 5, wherein the trays consist of two mutually spaced tray halves (54), between which is formed a gap for pushing through a tappet (60).

7. Apparatus according to Claim 6, wherein an assembly of lazy tongs (50) is arranged on each of the two sides, the said assemblies carrying the corresponding tray halves (54), and wherein the drive means (59) acts on both assemblies of lazy tongs (50).

8. Apparatus according to one of Claims 1 to 7, wherein each collector (39) is followed by a stacker (40) which contains carrying elements (66, 67) for receiving the products (25), the said carrying elements being arranged one above the other and their mutual spacing corresponding approximately to the second spacing of the trays (54) of the collectors (39), and all of the said carrying elements, with the exception of the lowest carrying element (66), being capable of being deactivated by a third drive means (72), in such a way that the products (25) fall one on top of the other.

9. Apparatus according to Claim 8, wherein the stackers (40) have lateral guides (65) on both sides and the carrying elements (67) can be moved out of the region of the lateral guides (65) by the third drive means (72).

10. Apparatus according to one of Claims 1 to 9, wherein the rests (22) of the gondolas (21) have slots (29) which are arranged one above the other and through which a tappet (34) can be pushed forwards in the exits station (3) by a fourth drive means (37).

11. Apparatus according to one of Claims 1 to 10, wherein the mutual spacing of the rests (22) is larger than double the product thickness and in the entry station (2), during the feeding of the rests (22), a supply member (23) is arranged at more than half the mutual spacing of the rests (22) above the rest (22) to be fed, so that a plurality of products can be deposited one above the other on a rest (22) in order to form a part stack.

12. Apparatus according to Claim 9, wherein the carrying elements (67) and/or the third drive means (72) are designed in such a way that they are moved out of the region of the lateral guides in succession from the top downwards.

13. Apparatus according to Claim 12, wherein each carrying element consists of two lateral carrying element halves (67), the carrying element halves (67) of each side being fastened in each case to a common arm (68, 69) actuated by the drive means (72), and the interspace (73) between the carrying element halves (67) being progressively larger upwards.

## Revendications

1. Dispositif de transport, de groupage et de stockage pour acheminer, à des machines d'emballage, des produits plats (25), en particulier des aliments, dans lequel une unité de stockage (1) présente un poste d'entrée (2) dans lequel le produit (25) est acheminé sur des supports (22) de nacelles porteuses (21), et un poste de sortie (3), dans lequel les produits (25) sont emmenés dans la même orientation que dans le poste d'entrée (2), les nacelles porteuses (21) passant devant les deux postes (2, 3) par un déplacement vertical, caractérisé en ce qu'on dispose dans le poste de sortie une unité de groupage (38), destinée à former des groupes de plusieurs produits superposés (25), l'unité de groupage comportant une série d'unités de rassemblement (39) avec des rayons (54), dont l'écart entre les uns et les autres peut être modifié d'une première position de base, dans laquelle cet écart correspond à l'écart entre les supports (22), à un deuxième écart plus étroit, au moyen d'un premier moyen d'entraînement (59) et d'un moyen de transmission (50).

2. Dispositif selon la revendication 1, dans lequel l'écart latéral entre les unités de rassemblement (39) est approximativement deux fois plus grand que l'écart latéral des produits (25) sur les supports (22).

3. Dispositif selon la revendication 2, dans lequel les unités de rassemblement (39) sont déplaçables collectivement dans trois positions dans la direction longitudinale de la série des unités de rassemblement au moyen d'un deuxième moyen d' entraînement (46), et ce en étapes représentant à chaque fois un quart de la distance de centre à centre entre des unités de rassemblement (39) voisines.

4. Dispositif selon l'une quelconque des revendications 1 à 3, dans lequel le moyen de transmission est formé de pinces extensibles (50).

5. Dispositif selon la revendication 4, dans lequel la pince extensible (50) présente des barres de liaison fendues (56), disposées latéralement, en tant qu'entre-toises.

6. Dispositif selon la revendication 4 ou 5, dans lequel les rayons se composent de deux moitiés de rayon (54) espacées l'une de l'autre, entre lesquelles est formée une fente pour le passage d'un coulisseau (60).

7. Dispositif selon la revendication 6, dans lequel une pince extensible (50) est disposée de chaque côté, portant les moitiés de rayon (54) correspondantes, et dans lequel le moyen d'entraînement (59) agit sur les deux pinces (50).

8. Dispositif selon l'une quelconque des revendications 1 à 7, dans lequel un dispositif d'empilage (40) est monté après chaque unité de rassemblement (39)' lequel contient des éléments porteurs (66, 67) disposés les uns au-dessus des autres, pour recevoir les produits (25), dont l'écart entre les uns et les autres correspond approximativement au deuxième écart entre les rayons (54) de l'unité de rassemblement (39), et dont tous les éléments porteurs, à l'exception de l'élément porteur inférieur (66), peuvent être rendus hors d'action par un troisième moyen d'entraînement (72) de telle sorte que les produits (25) tombent les uns sur les autres.

9. Dispositif selon la revendication 8, dans lequel les dispositifs d'empilage (40) ont des guides latéraux (65) des deux côtés, et les éléments porteurs (67) peuvent être déplacés hors de la zone des guides latéraux (65) par le troisième moyen d'entraînement (72).

10. Dispositif selon l'une quelconque des revendications 1 à 9, dans lequel les supports (22) des nacelles (21) présentent des fentes (29) disposées les unes sur les autres, à travers lesquelles, dans le poste de sortie (3), un coulisseau (34) peut être avancé au moyen d'un quatrième moyen d'entraînement (37).

11. Dispositif selon l'une quelconque des revendications 1 à 10, dans lequel l'écart entre les supports (22) est supérieur à la double épaisseur des produits, et dans le poste d'entrée (2), un organe d'amenée (23) est disposé au-dessus des supports (22) à charger, lors du chargement des supports (22), à plus de la moitié de l'écart entre les supports (22), de sorte que sur un support (22), plusieurs produits puissent être posés les uns sur les autres, pour former une pile partielle.

12. Dispositif selon la revendication 9, dans lequel les éléments porteurs (67) et/ou le troisième moyen d'entraînement (72) sont formés de telle sorte qu'ils soient déplacés les uns derrière les autres de haut en bas depuis la zone des guides latéraux.

13. Dispositif selon la revendication 12, dans lequel chaque élément porteur se compose de deux moitiés d'éléments porteurs (67) latérales, dans lequel les moitiés d'éléments porteurs (67) sont fixées de chaque côté à un bras commun (68, 69) actionné par le moyen d'entraînement (72), et dans lequel l'espace intermédiaire (73) entre les moitiés d'éléments porteurs (67) devient progressivement de plus en plus grand vers le haut.
